# EUROPEAN PATENT APPLICATION

(11) **EP 3 907 415 A1**
(43) Date of publication of application: **10.11.2021**
(21) Application number: 21158662.3
(22) Date of filing: 23.02.2021
(51) Int. Cl.: F16D 55/226, F16D 55/228, F16D 65/18, B60T 13/74

(54) **A BRAKE ASSEMBLY WITH A FIXED AND A SLIDING CALIPER SYSTEM AND A METHOD OF APPLYING A BRAKE**

(30) Priority: 08.05.2020 US 202016870060
(71) Applicant: Akebono Brake Industry Co., Ltd., Tokyo 103-8534 (JP)
(72) Inventor: Lou, Gang, Rochester, MI 48306 (US); Bahmata, Aurelian, South Lyon, MI 48178 (US)
(74) Representative: Kutzenberger Wolff & Partner

(57) **Abstract**

A brake assembly (10) and a method of applying a brake. The brake assembly (10) includes a fixed caliper system (50) and a sliding caliper system (30). Both of the fixed caliper system and the sliding caliper system operate together during a brake operation to generate a clamping force. The common brake operation may be a service brake operation, a parking brake operation, or both.

## Description

### FIELD

The present teachings generally relate to a brake assembly and to a method of operating a brake assembly.

### BACKGROUND

An opposed piston disc brake system includes one or more brake pistons and brake pads located on each side of a brake rotor. During a service brake operation, the opposing brake pistons are moved towards one another, which causes the opposing brake pads to move into contact with both sides of the brake rotor to create a clamping force that causes a moving vehicle to decelerate or stop.

Opposed piston disc brake systems typically include an electromechanical parking brake system, which operates separately from a hydraulic service brake system. Some electromechanical parking brake systems are constructed on a portion of a brake assembly that is spaced apart from the hydraulic service brake system. These types of brake assemblies are subject to an excess of size, an excess of weight, increased build complexity, or any combination thereof.

It may be desirable to improve upon the state of the art by providing an improved opposed piston disc brake system. It may be desirable to provide an opposed disc brake system whereby an electromechanical parking brake system is integrated with a hydraulic service brake system. It may be desirable to provide an opposed piston disc brake system whereby the electromechanical system and the hydraulic system cooperate in operating a service brake operation, a parking brake operation, or both. It may be desirable to provide an opposed disc brake system that utilizes one system and/or structure to carry out multiple braking operations so that the size, weight, and build complexity of the brake assembly may be reduced.

### SUMMARY

The present disclosure relates to a brake assembly, which may address at least some of the needs identified above, the brake assembly comprising: a fixed caliper system and a sliding caliper system; and wherein both of the fixed caliper system and the sliding caliper system operate during a service brake operation to generate a clamping force and only the sliding caliper system operates during a parking brake operation.

The present disclosure relates to a brake system, which may address at least some of the needs identified above, the brake system comprising: a brake caliper comprising an inboard side and an outboard side, and brake pistons; and wherein the inboard side comprises at least one more of the brake pistons than the outboard side.

The present disclosure relates to a method for applying a service brake, which may address at least some of the needs identified above, the method comprising: moving a first end of a brake pad with a hydraulic brake system, and moving a second end of the brake pad with an electromechanical brake system.

### BRIEF DESCRIPTION OF THE DRAWINGS

Fig. 1 is a perspective view of a brake assembly.
Fig. 2 is a sectional view of the brake assembly illustrated in Fig. 1, along the line A-A.
Fig. 3 is another sectional view of the brake assembly illustrated in Fig. 1, along the line A-A.
Fig. 4A is a plan view of a brake assembly performing a braking operation.
Fig. 4B is a plan view of a brake assembly performing another braking operation.
Fig. 5 is a sectional view of the brake assembly illustrated in Fig. 1, along the line A-A.
Fig. 6 is a sectional view of the brake assembly illustrated in Fig. 1, along the line B-B.

### DESCRIPTION

The present teachings are directed to a brake assembly and/or method of operating a brake assembly during a braking operation. The braking operation may be during a service brake apply and/or during a parking brake apply. The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the description herein, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The teachings provide a brake assembly (which may also be referred to herein as a brake system). The brake assembly may function to create a clamping force to decelerate a vehicle, stop a vehicle, maintain a vehicle in a stopped (e.g., parked) position, or any combination thereof. The brake assembly may function to carry out a service brake operation (i.e., a brake that is applied to decelerate or stop a vehicle during normal driving operation), a parking brake operation (i.e., a brake that is applied when the vehicle is in park or when an emergency stop must be performed), or both. Preferably the brake assembly may carry out both the service brake operation and the parking brake operation.

The brake assembly may comprise a fixed caliper system, a sliding caliper system (which may also be referred to as a floating caliper system), or both. The fixed caliper system and the sliding caliper system may be integrated together into a common assembly that can be attached to the vehicle. In other words, the brake assembly may comprise a common brake caliper with the features of a sliding brake caliper and the features of a fixed or opposed caliper integrated thereon.

Both of the fixed caliper system and the sliding caliper system may operate together or at the same time during one or more braking operations. The one or more braking operations may include a service brake apply or operation, a parking brake apply or operation, or both. In some configurations, only the sliding caliper system may operate during a parking brake operation. In some configurations, only the sliding caliper may operate during the service brake operation. In some configurations, only the fixed caliper system operates during the parking brake operation. In some configurations, only the fixed caliper system operates during the service brake operation.

The brake assembly may include one or more fixed caliper systems. The fixed caliper system may function to decelerate a vehicle, stop a vehicle, or maintain a vehicle in a stopped position by moving the brake pistons and brake pads into engagement with the brake rotor. The fixed caliper system may perform a service brake operation, a parking brake operation, or both. The fixed caliper system may comprise a brake caliper that fixedly attaches to a vehicle (e.g., attachment to a steering knuckle). The brake caliper may have a unitary construction (e.g., formed from a single casting) or a binary construction (e.g., two or more portions that couple together). The fixed caliper system may further comprise one or more caliper bores, one or more brake pistons. Hydraulic fluid (e.g., hydraulic system) may move one or more of the brake pistons of the fixed caliper system by applying a pressure to the brake pistons. A rotary to linear mechanism and motor (e.g., electromechanical system) may move one or more of the brake pistons of the fixed caliper system. The fixed caliper system may be located on a trailing end of the brake assembly, a leading end of the brake assembly, an outboard side of the brake assembly, an inboard side of the brake assembly, or any combination thereof.

The brake assembly may include one or more sliding caliper systems. The sliding caliper system may function to decelerate a vehicle, stop a vehicle, or maintain a vehicle in a stopped position by moving the brake pistons and brake pads into engagement with the brake rotor. The sliding caliper system may perform a service brake operation, a parking brake operation, or both. Preferably, the sliding caliper system performs both a service brake operation and a parking brake operation. The sliding caliper system may be located on a trailing end of the brake assembly, a leading end of the brake assembly, an outboard side of the brake assembly, an inboard side of the brake assembly, or any combination thereof. Hydraulic fluid (e.g., hydraulic system) may move one or more of the brake pistons of the sliding caliper system by applying a pressure to the brake pistons. A rotary to linear mechanism and motor (e.g., electromechanical system) may move one or more of the brake pistons of the sliding caliper system.

The sliding caliper system may be integrated with (i.e., integrated means the sliding caliper system may use or interact with one or more components of the fixed caliper system). For example, the sliding caliper system may use one or more brake pistons, one or more caliper bores, or both, of the fixed caliper system to create a brake apply. For example, the sliding caliper system may include a brake piston that interacts with a caliper bore formed in the fixed caliper system. The sliding caliper system or at least a portion thereof may be fixedly attached to the brake caliper of the fixed caliper system.

The sliding caliper system may be removably attached to the fixed caliper system. The fixed caliper system may include one or more of pins, bolts, sliders, surfaces, components, any other suitable features, or any combination thereof, that cooperate with one or more mating features on the sliding caliper system. The sliding caliper system may be integrated into or attached to an inboard side and/or an outboard side of the brake assembly. The sliding caliper system may be integrated into or attached to a leading end and/or a trailing end of the brake assembly. The sliding caliper system may comprise one or more pieces. For example, the bridge and the fingers of the sliding caliper may be formed from a single, integral component. In some configurations, the bridge and the one or more fingers of the sliding caliper may be formed from two or more discrete pieces that are connected or fastened together via one or more fasteners like bolts, screws, pins, welds. The bridge and the one or more fingers may be formed from the same material. The bridge and the one or more fingers may be formed from different materials. The bridge and the one or more fingers may be formed from different materials to provide for a desired stiffness in the sliding caliper system.

The brake assembly may comprise an inboard side, which faces or is configured to face a proximal portion of a vehicle or is located closer to a center line of the vehicle. The brake assembly may comprise an outboard side, which opposes the inboard side. The inboard side may be located on one side (e.g., inside) of a brake rotor and the outboard side may be located on another side (e.g., outside) of the brake rotor. The brake assembly may comprise a trailing end, which is an end facing a rear of a vehicle, and leading end, which is an end facing a front of the vehicle.

The clamping force may be a force that, when applied with a brake pad or friction member against a braking surface, functions to create drag to decelerate, stop, and/or prevent movement (e.g., rotation) of a brake rotor and/or vehicle. The clamping force may be created during a parking brake operation (i.e., a parking brake force) and/or during a service brake operation (i.e., service brake force). One or more brake pads may be used to create the clamping force. A service brake operation and/or a parking brake operation may be performed using the same brake pads to create the clamping force. Stated another way, one set of brake pads (i.e., inboard pad and outboard pad) may be used during one or more braking operations (service and/or braking) to create the clamping force. In other words, the brake system may be free of one or more brake pads used only for one braking operation (service or braking) and another one or more brake pads used only for another braking operation (the other of the service or braking).

The clamping force can be created by converting the kinetic energy of the brake rotor and/or vehicle into thermal energy by frictionally engaging the brake pads with one or more sides of the brake rotor. A desired clamping force may be obtained by a degree of movement of a brake pedal, a degree of movement of a handbrake, an ECU setting (e.g., a desired clamping force preset for activation of an electronic parking brake), or any combination thereof

The brake assembly may include one or more brake pads. The one or more brake pads may include a friction material and a pressure plate. The brake pads may be supported on the brake assembly so that the friction material faces a side of the brake rotor. The pressure plate may oppose the friction surface.

Brake pistons, fingers, or both may face and/or may be in communication with (i.e., directly physically interact with) the pressure plates of a corresponding brake pad. The brake pistons, the fingers, or both may face and/or be in communication with ends (e.g., a leading end and a trailing end) of the brake pads, a central portion or a substantially central portion of the brake pads, or both. The brake pistons may be in contact with the pressure plate of an inboard brake pad, the brake pistons may be in contact with an outboard brake pad, the fingers may be in contact with the pressure plate of an inboard brake pad, the fingers may be in contact with the pressure plate of an outboard brake pad, or any combination thereof. During a service brake operation and/or during a parking brake operation, the brake pistons and/or the fingers may push, pull, or otherwise move all or an end of a corresponding brake pad so that the corresponding friction material engages a corresponding side of the brake rotor to create a clamping force. The brake pads may be moved via a hydraulic system, an electromechanical system, or both. For example, the inboard brake pad may be moved with at least one brake piston moved with the hydraulic brake system and at least one brake piston moved with the electromechanical system; the outboard brake pad may be moved with at least one brake piston moved with the hydraulic brake system and at least one finger moved by the electromechanical brake system; or vice versa.

The teachings herein provide for a method of operating a brake. The method may be used for a service brake operation, a parking brake operation, or both. The method may comprise one or more of the following steps. Some of the steps may be duplicated, removed or eliminated, rearranged relative to other steps, combined into one or more steps, separated into two or more steps, or a combination thereof. The method may comprise moving a first end of a brake pad with a hydraulic system, and moving a second end of the brake pad with an electromechanical system, or vice versa. The first end and the second end may be moved at substantially the same time; the first end may be moved before the second end is moved, or vice versa; or the first end and the second end alternate being moved until a desired clamping force is achieved.

The brake assembly may include one or more brake rotors. The brake rotor may function to communicate with the components of the brake assembly (e.g., the brake pad) to create a clamping force. The brake rotor may include an inboard side and an opposing outboard side. The brake pads may be located at the inboard side of the brake rotor (i.e., inboard brake pads), the outboard side of the brake rotor (i.e., outboard brake pads), or both. The inboard side of the brake assembly may be located on the inboard side of the brake rotor and the outboard side of the brake assembly may be located on the outboard side of the brake rotor, or vice versa.

The brake assembly may comprise one or more caliper bores. Each caliper bore may define a hollow region in the brake assembly or brake caliper. The caliper bores may function to receive and support a corresponding brake piston. The caliper bores may be located on the inboard side of the brake assembly, the outboard side of the brake assembly, or both. Each side of the brake rotor may face corresponding caliper bores. A brake piston received and supported within a caliper bore may be moved axially within the caliper bore to create or release a clamping force during a service brake operation, a parking brake operation, or both.

The brake assembly may include one or more brake pistons. The brake pistons may function to move a brake pad, or a corresponding end of the brake pad, towards the brake rotor to create the clamping force. The brake pistons may be moved along an axis colinear or substantially colinear with an axis of the caliper bores.

The brake pistons may be caused to move and/or a clamping force may be generated during a service brake operation, a parking brake operation, or both. For example, during a service brake operation and/or a parking brake operation, one or more brake pistons may be moved axially in a first direction by pressurizing a hydraulic fluid (e.g., brake fluid) and/or one or more other brake pistons may be moved axially in a first direction by a rotary to linear stage mechanism connected to a motor or gear train. The one or more brake pistons may be caused to move and release a clamping force when a service brake operation, a parking brake operation, or both are ceased. For example, upon ceasing a service brake operation, a parking brake operation, or both, one or more brake pistons may be allowed to move axially in a second direction by depressurizing the hydraulic fluid and allowing the brake pistons to be pulled into the caliper bores and/or one or more brake pistons may be moved axially in a second direction by a rotary to linear stage mechanism and the motor, or allowing the motor to slightly back drive and allowing the brake pistons to be pulled into the caliper bores. Movement of the brake pistons in the second direction during either cessation of the service or parking brake application may be caused by boots (i.e., rubber seals) coupled to both the caliper bores and the brake pistons. As the brake pistons are caused to move axially in the first direction, the boot telescopes and stores elastic potential energy. As the service brake operation and/or the parking brake operation cease, the brake pistons are caused to move in the second direction by the stored elastic potential energy, which is converted into kinetic energy.

The brake pistons may be components of the fixed caliper system, the sliding caliper system, or both. For example, in one envisioned system, two or more brake pistons may be caused to move by a hydraulic brake system (i.e., the fixed caliper system) and one or more brake pistons may be caused to move by an electromechanical brake system (i.e., the sliding caliper system). However, in other systems, any number of brake pistons may be moved via the fixed system and any number of brake pistons may be moved via the sliding system.

The outboard side of the brake assembly may comprise a different number of brake pistons than the inboard side of the brake assembly. The inboard side may comprise at least one more brake piston than the outboard side, or vice versa. For example, the inboard side of the brake assembly may include two brake pistons and the outboard side of the brake assembly may include one brake piston.

One or more brake pistons on the outboard side may oppose one or more brake pistons on the inboard side; one or more brake pistons on the outboard side may be offset from one or more brake pistons on the inboard side; or both. Oppose may mean brake pistons aligned along a common axis. Brake pistons may move along axes that are angled relative to each other and still may be opposing (e.g., the center of mass of two brake pistons are aligned along a common axis). Offset may mean brake pistons not aligned along a common axis or in other words one brake piston is situated further forward, backward, above, below, or at an angle, with respect to another brake piston. A brake piston of the sliding caliper system may be located on an inboard side and the outboard side may be free of a brake piston opposing the inboard brake piston. The brake assembly may be free of a brake piston opposing the rotary to linear stage mechanism.

The brake assembly may include brake pistons on a trailing end, a leading end, or both. For example, the outboard side may include a trailing end brake piston and may be free of a leading end brake piston; and the inboard side may include a trailing end brake piston and a leading end brake piston.

One or more of the brake pistons may include a piston bore. The piston bore may define the open end of the brake piston. The piston bore may function to receive at least a portion of the sliding caliper system (e.g., a nut and/or a spindle of the rotary to linear stage mechanism). The piston bore may be a cup or recess formed into the open end of the brake piston. The piston bore may include a surface at or near a terminal wall (closed end) of the piston bore. One or more of the brake pistons may include a piston bore. Some of the brake pistons may be free of a piston bore. A gap may be defined between a corresponding surface on the nut and the surface at the terminal wall. During a brake operation (service brake or parking brake), the gap may be taken up by moving the rotary to linear stage mechanism in a direction towards a brake pad. Once the gap is taken up, further movement of the rotary to linear stage mechanism may cause the rotary to linear stage mechanism to press against the terminal wall and then move the brake piston and/or the brake pad against the brake rotor to create a clamping force.

One or more of the piston bores may have an inner diameter that is larger than the outer diameter of the rotary to linear stage mechanism (e.g., the nut). As discussed in further detail below, a brake piston operated only by an electromechanical brake system may be free of seals between the rotary to linear stage mechanism and the piston bore. Accordingly, weight of the brake piston and the brake assembly may be reduced by enlarging a dimension of the piston bore and/or reducing a dimension of the rotary to linear stage mechanism.

The brake assembly may include one or more seals located between the brake pistons and the caliper bores, between the nut and the caliper bores, or both. The seals may be located in seats formed in the brake pistons. The seals may function to prevent fluid (e.g., brake fluid) leakage, pressure loss, or both. The seals may be included in the fixed caliper system, the sliding caliper system, or both. The seals may be particularly useful for brake pistons acted upon by hydraulic brake systems or by both hydraulic brake systems and electromechanical brake systems. The sliding caliper system of the present disclosure may be solely an electromechanical brake system and so the sliding caliper system may be free of a seal at the interface of the brake piston and the rotary to linear stage mechanism, at the interface of the rotary to linear stage mechanism and the caliper bore, or both. Obviating the need for one or more seals may reduce the manufacture complexity of brake assemblies.

The electromechanical system may include one or more motors. The sliding caliper system may include one or more motors. The fixed caliper system may include one or more motors. The motor may be moved to provide a torque to the rotary to linear stage mechanism and cause the rotary to linear stage mechanism to rotate. The motor may actuate, turn-on, or begin a brake operation, whether service brake, parking brake, or both. The torque may cause to move, directly or indirectly, the rotary to linear stage mechanism, the brake pistons, the bridge, the fingers, the brake pads, or any combination thereof. The motor may be attached to the sliding caliper system or attached to a remote location on the vehicle (e.g., the chassis of the vehicle). The motor may be activated on-demand when a user (e.g., a driver) wishes to operate the service brake operation, the parking brake operation, or both. The motor may be activated automatically to perform a parking brake operation when a vehicle is stopped, put in park, turned OFF, or any combination thereof. The motor may be activated automatically to disengage the parking brake operation when a vehicle is in gear and/or turned ON.

The electromechanical system may include one or more rotary to linear mechanisms. The sliding caliper system may include one or more rotary to linear mechanisms. The fixed caliper system may include one or more rotary to linear mechanisms. The rotary to linear mechanism may function to receive a torque (i.e., rotational force) and transfer the torque into an axial force (i.e., linear force). The rotary to linear stage mechanism may be a spindle and a nut, a lead screw and a nut, a ball screw and a nut, a ball and ramp assembly, or any combination thereof. The rotary to linear stage mechanism may move a brake piston so that the brake piston moves a brake pad. The rotary to linear stage mechanism may be at least partially located within the fixed caliper system. The rotary to linear stage mechanism may be located on an outboard side of the brake assembly, an inboard side of the brake assembly, a leading end of the brake assembly, a trailing end of the brake assembly, or any combination thereof.

The rotary to linear stage mechanism may include a spindle and a nut. The spindle may be coupled to the motor. The spindle may be coupled directly to an output of the motor, or indirectly via one or more gears, gear trains, or other transfer mechanisms. The torque of the motor may axially rotate the spindle in a clockwise direction or a counterclockwise direction. The nut may be removably coupled (e.g., threaded onto) to the spindle. The nut may interface directly with the brake piston.

The rotary to linear stage mechanism may include one or more of a ball screw and a nut, a roller screw and a nut, or both. Examples of suitable ball screws may be those that utilize ball bearings as load transfer elements between the nut and the ball screw. During movement of the ball screw, the ball bearings may circulate along races or grooves between the ball screw and the nut. A roller screw (otherwise referred to as a planetary screw) may be similar to a ball screw except that roller screws use rollers as the load transfer elements between the nut and the ball screw. The load on the ball screw, the roller screw, or both is distributed over a large number of ball bearings or rollers, via roller threads, respectively, so that each ball or roller, when subjected to force, may roll, and therefore, friction is reduced, which may equate to high efficiency. Accordingly, less force or torque may be required to move a screw and nut in a ball screw or roller screw in an operation direction, a release direction, or both.

The rotary to linear stage mechanism may include one or more ball and ramp assemblies. The ball and ramp assembly may function to create a clamp force during a service brake operation, a parking brake operation, or both. The ball and ramp assembly may include a rotating side (e.g., a first ramp plate) and a stationary side (i.e., a second ramp plate) with rolling elements (e.g., balls) interposed therebetween. Each ramp plate may include corresponding ramps each having a deep end and a shallow end. During operation, for example, when the rotating side is rotated such that the balls move from the deep end to the shallow end of the ramp, the balls provide an axial force against the stationary side, which causes the rotating side to also move axially from the stationary side. The ball and ramp assembly may be located between the motor and the brake piston.

The rotary to linear stage mechanism may include a spindle engaging a brake piston, without the use of a nut. In such a configuration, the brake piston may be restricted or prevented from rotating in the caliper bore. The spindle may threadably engage the brake piston. Accordingly, rotation of the spindle causes the brake piston to move axially.

The sliding caliper system includes one or more bridges and one or more fingers. The bridge and finger may function to move a brake pad against the brake rotor to create a clamping force. The bridge may extend from an inboard side of the brake assembly to an outboard side of the brake assembly or vice versa. The finger may extend from an end of the bridge. The bridge and finger may move (e.g., slide) during a service brake operation, a parking brake operation, or both. For example, when the inboard brake piston moves in a first direction and causes the inboard brake pad to move against the brake rotor to create a clamping force, the force may cause the bridge and finger to move in an opposing direction so that the finger can pull the outboard brake pad against the brake rotor. The bridge and finger may be moveably supported on pins or other suitable features on the brake caliper so that the bridge and finger can move the brake pad against the brake rotor during a service brake operation, a parking brake operation, or both. The finger may directly communicate with the pressure plate of a brake pad or a bracket located between the pressure plate and the finger. The bridge and the finger may be a single, integral component or the bridge and the finger may be individual components that are jointed together via one or more suitable fasteners.

The following illustrations provide examples of the one or more elements of the brake assembly and components thereof. It is understood that one or more of these elements may be duplicated, eliminated, and/or combined with one or more other elements disclosed herein. Several elements described herein that are not necessarily illustrated in the Figures. These elements are still part of the disclosure and may be added to, duplicated, eliminated, and/or combined with one or more other elements disclosed herein

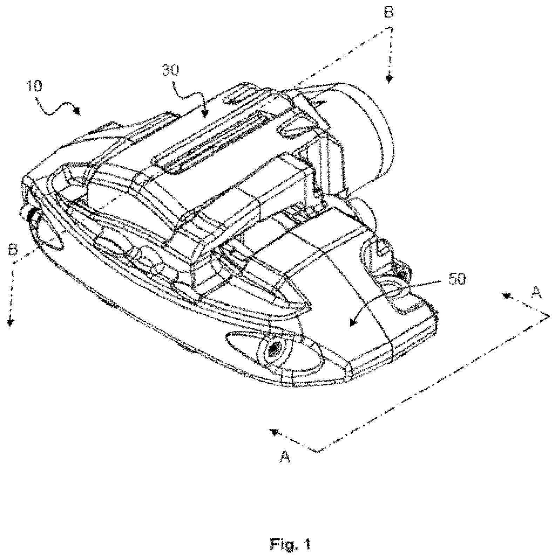

Fig. 1 is a perspective view of a brake assembly 10. The brake assembly 10 comprises a fixed caliper system 50 and a sliding caliper system 30.

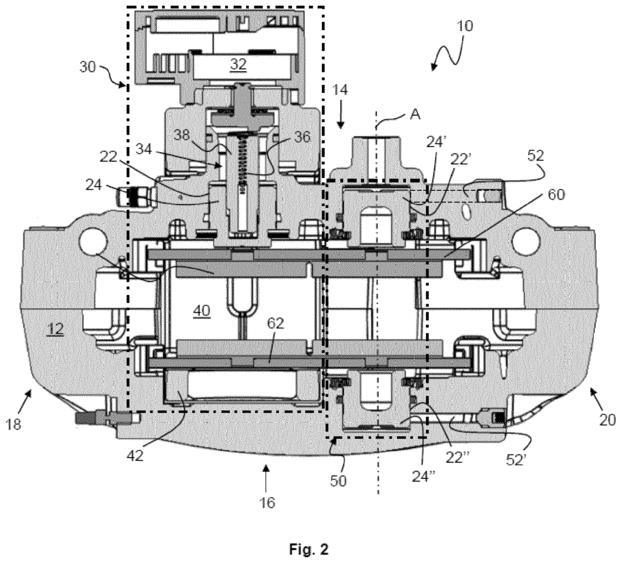

Fig. 2 is a sectional view of the brake assembly 10 illustrated in Fig. 1, along the line A-A. The brake assembly 10 includes an inboard side 14 and an outboard side 16. The brake assembly 10 includes a leading end 18 and a trailing end 20. The brake assembly 10 includes an inboard brake pad 60 and an outboard brake pad 62. The sliding caliper system 30 is located at the leading end 18 of the brake assembly 10. The fixed caliper system 50 is located at the trailing end 20 of the brake assembly 10.

The sliding caliper system 30 of Fig. 2 may include an electromechanical system that may include a motor 32 and a rotary to linear mechanism 34. The rotary to linear mechanism 34 may include a spindle 36 coupled to the motor 32 and a nut 38 threaded onto the spindle 36. The spindle 36 may be directly connected to an output of the motor 32, or there may be one or more mechanisms, gears, or gear trains provided between the motor output and the spindle 36. The one or more mechanisms, gears, or gear trains may function to increase and/or decrease a torque output from the motor 32. During a brake apply, the motor 32 drives the spindle 36 causing the nut 38 to move axially, which causes a brake piston to move. The brake apply may be a service brake apply and/or a parking brake apply.

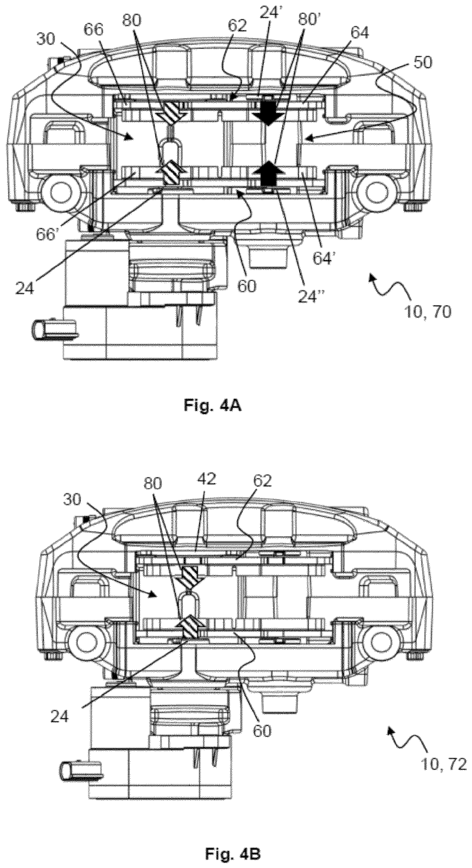

The sliding caliper system 30 of Fig. 2 comprises a caliper bore 22 and a brake piston 24, the brake piston 24 being located and movable within the caliper bore 22. The nut 38 interfaces with the brake piston 24 and axially moves the brake piston 24 during a brake apply. The brake apply may be a service brake apply or operation 70 and/or a parking brake apply or operation 72, discussed below at Fig. 4A and Fig. 4B. The brake assembly 10 is free of a brake piston, or does not include a brake piston, that opposes the brake piston 24.

The sliding caliper system 30 of Fig. 2 comprises a bridge 40 and a finger 42. The bridge 40, which slides relative to the brake caliper 12 during or after a brake apply, extends between the inboard side 14 of the brake assembly 10 and the outboard side 16 of the brake assembly 10. The finger 42 extends from the bridge 40 and engages the outboard brake pad 62. As the motor 32 operates during either a service brake operation 70 or a parking brake operation 72 (*see* Fig. 4A and Fig. 4B) the brake piston 24 moves axially an extent until the brake piston 24, via the inboard brake pad 60, encounters resistance (e.g., the inboard brake pad is moved towards and into contact with an inboard side of a brake rotor). An opposing reaction force then causes the bridge 40 to move or slide relative to the brake caliper 12. The finger 42, being coupled to the bridge 40 moves towards the inboard side of the brake caliper 12, thus moving the outboard brake pad 62 towards and then into contact with the outboard side of the brake rotor.

In some configurations, the sliding caliper system 30 may be free of an electromechanical system (i.e., free of a motor, a rotary to linear mechanism, or both). Instead, the brake piston of the sliding caliper system 30 may be moved via a hydraulic system by pressurizing hydraulic fluid.

The fixed caliper system 50 of Fig. 2 includes opposing caliper bores 22', 22" and brake pistons 24', 24". The brake pistons 24', 24" are located and movable within the respective caliper bores 22', 22". The fixed caliper system 50 includes a hydraulic brake system. The hydraulic brake system means or includes a hydraulic fluid 52, 52' within the caliper bores 22', 22" that is pressurized, which causes the brake pistons 24', 24" to move axially during the brake operation 70 illustrated in Fig. 4A.

The brake piston 24 of the sliding caliper system 30 of Fig. 2 is located on the inboard side 14 and the leading end 18 of the brake assembly 10. The brake assembly 10 is free of a caliper bore and brake piston on the leading end 18 outboard side 16 that opposes the brake piston 24 and caliper bore 22 on the inboard side 14.

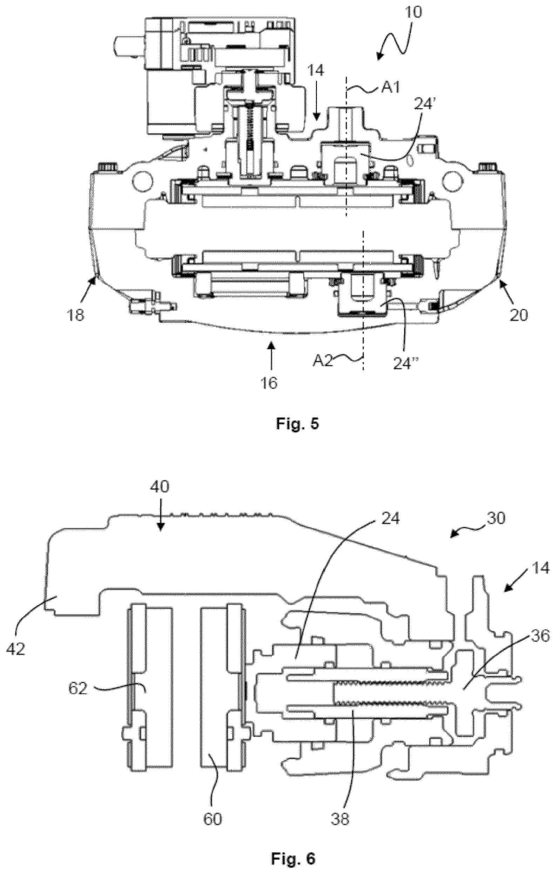

The brake piston 24' of the fixed caliper system 50 of Fig. 2 is located on the inboard side 14 and the trailing end 20 of the brake assembly 10. The brake pistons 24, 24' oppose each other. The brake pistons 24, 24' may be aligned along a common axis A; however, in some configurations, the brake pistons 24, 24' may be offset or not aligned along the common axis A (See Fig. 5, for example). Both of the brake pistons 24, 24' move the inboard brake pad 60 during the brake operation 70 illustrated in Fig. 4A. The brake piston 24" of the fixed caliper system 50 is located on the outboard side 16 and the trailing end 20 of the brake assembly 10. The finger 42 is located on the outboard side 16 and the leading end 18 of the brake assembly 10. The finger 42 opposes the rotary to linear mechanism 34. The brake piston 24" and the finger 42 move the outboard brake pad 62 during the brake operation 70 illustrated in Fig. 4A. The brake piston 24 and the finger 42 move both the inboard brake pad 60 and the outboard brake pad 62 during the brake operation 72 illustrated in Fig. 4B.

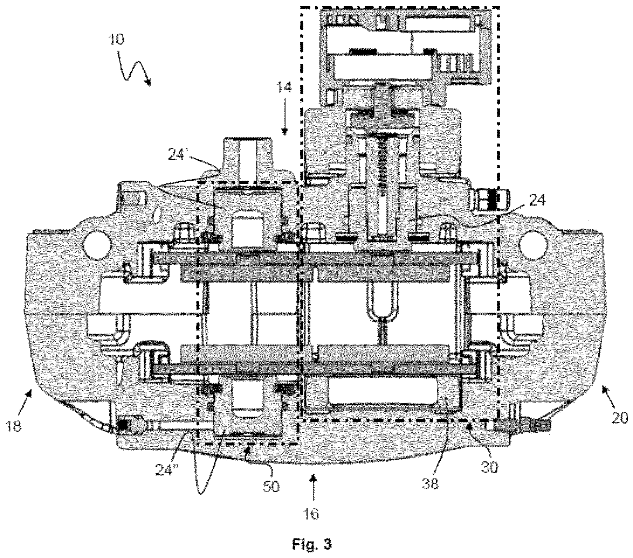

Fig. 3 is a sectional view of a brake assembly 10 along the line A-A, as shown in Fig. 1. The brake assembly 10 includes an inboard side 14 and an outboard side 16 as well as a leading end 18 and a trailing end 20. The brake assembly 10 is similar to the brake assembly 10 shown in Fig. 2 except that the sliding caliper system 30 is located on the trailing end 20 of the brake assembly 10 and the fixed caliper system 50 is located on the leading end 18 of the brake assembly 10.

The brake piston 24 of the sliding caliper system 30 of Fig. 3 is located on the inboard side 14 and the trailing end 20 of the brake assembly 10. The finger 42 of the sliding caliper system 30 is located on the outboard side 16 and the trailing end 20 of the brake assembly 10. The brake assembly 10 is free of a caliper bore and brake piston on the trailing end 20 outboard side 16 that opposes the brake piston 24 and caliper bore on the inboard side 14.

The brake piston 24' of the fixed caliper system 50 of Fig. 3 is located on the inboard side 14 and the leading end 18 of the brake assembly 10. The brake piston 24" of the fixed caliper system 50 is located on the outboard side 16 and the leading end 18 of the brake assembly 10.

Fig. 4A is a plan view of a brake assembly 10 performing a brake operation 70. The brake operation 70 may be a service brake apply or operation. However, it is understood that the following operation may additionally or may alternatively be performed during a parking brake apply or operation. During the brake operation 70, both the opposing brake system 50 and the sliding brake system 30 move the brake pistons 24, 24', 24" in an apply direction 80, 80', which then move the corresponding inboard brake pad 60 and the outboard brake pad 62 towards a brake rotor.

A method is described herein whereby a first end 64, 64' of the brake pads 60, 62 and a second end 66, 66' of the brake pads 60, 62 are moved at substantially the same time or alternate being moved until a desired clamping force is achieved. Regarding said alternating movement the first end 64, 64' may be moved before the second end 66, 66' is moved, or vice versa.

Fig. 4B is a plan view of a brake assembly 10 performing another brake operation 72. The brake operation 72 may be a parking brake apply or operation. However, it is understood that the following operation may additionally or may alternatively be performed during a service brake operation. During the brake operation 72, the electromechanical brake system 30 moves the brake pistons 24 and the finger 42 in an apply direction 80, 80', which then move the corresponding inboard brake pad 60 and the outboard brake pad 62 towards a brake rotor

Fig. 5 illustrates a brake assembly 10. The brake assembly 10 may include one or more of the features described above and/or below; thus, in the interest of brevity, similar features will not be received again.

The inboard side 14 of the brake assembly 10 of Fig. 5 comprises brake piston 24' that extends along axis A1 and the outboard side 16 comprises brake piston 24" that extends along axis A2. The axis A1 and A2 are not aligned or common. In other words, while the brake pistons 24' 24" oppose each other, they are not aligned along a common axis, like the brake pistons 24'. 24" in Fig. 2 described above. In Fig. 5, the brake piston 24" is moved closer to the trailing end 20, and brake piston 24' is closer to the leading end 18. In come configurations, this may be reversed and brake piston 24" may be moved closer to the leading end 18, and brake piston 24' may be moved closer to the trailing end 20. In some configurations, where the opposing brake pistons are aligned along a common axis (Fig. 2 for example) or are not aligned along a common axis (Fig. 5 for example), the opposing brake pads may none the less be directly opposed one another, or one of the brake pads may be moved towards one end of the brake assembly or another end. In other words, the brake pads may oppose each other but one pad may be moved closer to the trailing end 20 or the leading end 18 relative to the other brake pad.

Fig. 6 is a sectional view of the brake assembly 10 illustrated in Fig. 1, along the line B-B. The sliding caliper system 30 may include an electromechanical system that may include a motor 32 (Fig. 1) and a rotary to linear mechanism 34. The rotary to linear mechanism 34 may include a spindle 36 coupled to the motor and a nut 38 threaded onto the spindle 36. The spindle 36 may be directly connected to an output of the motor, or there may be one or more mechanisms, gears, or gear trains provided between the motor output and the spindle 36. During a brake apply, the motor 32 drives the spindle 36 causing the nut 38 to move axially, which causes a brake piston 24 to move. The brake apply may be a service brake apply or operation 70 and/or a parking brake apply or operation 72, discussed at Fig. 4A and Fig. 4B.

The sliding caliper system 30 of Fig. 6 comprises a bridge 40 and a finger 42. The finger 42 extends from the bridge 40 and engages the outboard brake pad 62. As the motor 32 operates during either a service brake operation 70 or a parking brake operation 72 (*see* Fig. 4A and Fig. 4B) the brake piston 24 moves axially an extent until the brake piston 24, via the inboard brake pad 60, encounters resistance (e.g., the inboard brake pad is moved towards and into contact with an inboard side of a brake rotor). An opposing reaction force then causes the bridge 40 to move or slide relative to the brake caliper. The finger 42, being coupled to the bridge 40 moves towards the inboard side of the brake caliper 12, thus moving the outboard brake pad 62 towards and then into contact with the outboard side of the brake rotor.

Any numerical values recited in the above application include all values from the lower value to the upper value in increments of one unit provided that there is a separation of at least 2 units between any lower value and any higher value. These are only examples of what is specifically intended and all possible combinations of numerical values between the lowest value and the highest value enumerated are to be considered to be expressly stated in this application in a similar manner. Unless otherwise stated, all ranges include both endpoints and all numbers between the endpoints.

The terms "generally" or "substantially" to describe angular measurements may mean about +/- 10° or less, about +/- 5° or less, or even about +/- 1° or less. The terms "generally" or "substantially" to describe angular measurements may mean about +/- 0.01° or greater, about +/-0.1° or greater, or even about +/- 0.5° or greater. The terms "generally" or "substantially" to describe linear measurements, percentages, or ratios may mean about +/- 10% or less, about +/-5% or less, or even about +/- 1% or less. The terms "generally" or "substantially" to describe linear measurements, percentages, or ratios may mean about +/- 0.01% or greater, about +/- 0.1% or greater, or even about +/- 0.5% or greater.

The term "consisting essentially of' to describe a combination shall include the elements, ingredients, components, or steps identified, and such other elements ingredients, components or steps that do not materially affect the basic and novel characteristics of the combination. The use of the terms "comprising" or "including" to describe combinations of elements, ingredients, components, or steps herein also contemplates embodiments that consist essentially of the elements, ingredients, components, or steps.

Plural elements, ingredients, components, or steps can be provided by a single integrated element, ingredient, component, or step. Alternatively, a single integrated element, ingredient, component, or step might be divided into separate plural elements, ingredients, components, or steps. The disclosure of "a" or "one" to describe an element, ingredient, component, or step is not intended to foreclose additional elements, ingredients, components, or steps.

### REFERENCE NUMERALS

- 10: Brake assembly / brake system
- 12: Brake caliper
- 14: Inboard side of brake assembly
- 16: Outboard side of brake assembly
- 18: Leading end of brake assembly
- 20: Trailing end of brake assembly
- 22: Caliper bore
- 24: Brake piston
- 30: Sliding caliper system / electromechanical brake system
- 32: Motor
- 34: Rotary to linear mechanism
- 36: Spindle
- 38: Nut
- 40: Bridge
- 42: Finger
- 50: Fixed caliper system / hydraulic brake system
- 52: Hydraulic fluid
- 60: Inboard brake pad
- 62: Outboard brake pad
- 64: First end
- 66: Second end
- 70: Service brake operation
- 72: Parking brake operation
- 80: Clamping force

## Claims

1. A brake assembly, comprising:
a fixed caliper system; and
a sliding caliper system;
wherein both of the fixed caliper system and the sliding caliper system operate together during a first braking operation to generate a clamping force.

2. The brake assembly according to Claim 1, wherein only the sliding caliper system operates during a second braking operation.

3. The brake assembly according to Claim 1 or Claim 2, wherein the brake assembly comprises an inboard brake pad and an outboard brake pad; and
wherein both of the fixed caliper system and the sliding caliper system operate to move the inboard brake pad and the outboard brake pad during the first braking operation.

4. The brake assembly according to any of the preceding claims, wherein the brake assembly comprises an inboard side and an outboard side; and
wherein the inboard side comprises one or more brake pistons than the outboard side, or the outboard side comprises one or more brake pistons than the inboard side.

5. The brake assembly according to Claim 4, wherein the inboard side comprises an inboard brake piston, and the outboard side is free of a brake piston that opposes the inboard brake piston.

6. The brake assembly according to Claim 4 or Claim 5, wherein the brake system comprises a trailing end and a leading end;
wherein the inboard side includes an inboard trailing end brake piston and an inboard leading end brake piston; and
wherein the outboard side includes an outboard trailing end brake piston that opposites the inboard trailing end brake piston, and the outboard side is free of a brake piston that opposes the inboard leading end brake piston.

7. The brake assembly according to Claim 4 or Claim 5, wherein the brake system comprises a trailing end and a leading end;
wherein the inboard side includes an inboard trailing end brake piston and an inboard leading end brake piston; and
wherein the outboard side includes an outboard leading end brake piston that opposites the inboard leading end brake piston, and the outboard side is free of a brake piston that opposes the inboard trailing end brake piston.

8. The brake assembly according to any of the preceding claims, wherein the first braking operation is a service brake operation and the second braking operation is a parking brake operation.

9. The brake assembly according to any of Claims 1 through 8, wherein the fixed caliper system comprises two or more brake pistons that are moved during the first braking operation by pressurizing hydraulic fluid, and the sliding caliper system comprises at least one brake piston that is moved during the first braking operation pressurizing hydraulic fluid.

10. The brake assembly according to any of Claims 1 through 8, wherein the fixed caliper system comprises two brake pistons that are moved during the first braking operation by pressurizing a hydraulic fluid, and the sliding caliper system comprises one brake piston that is moved during the first braking operation with an electromechanical system.

11. The brake assembly according to Claim 10, wherein the brake assembly is free of a brake piston opposing the brake piston of the sliding caliper system.

12. A method of applying a brake with the brake assembly according to Claim 1, the method comprising:
moving a first end of a brake pad with the fixed caliper system, and
moving a second end of the same brake pad with the sliding caliper system.

13. The method according to Claim 12, wherein the brake is applied during a service braking operation.

14. The method according to Claim 12 or Claim 13, wherein the brake is applied during a parking braking operation.

15. The method according to any of Claims 12 through 14, wherein the brake pad is moved with only the sliding caliper system during a parking braking operation.
